# EUROPÄISCHE PATENTSCHRIFT

(11) **EP 1 860 378 B1**
(45) Veröffentlichungstag und Bekanntmachung des Hinweises auf die Patenterteilung: **20.04.2016**
(21) Anmeldenummer: 07106791.2
(22) Anmeldetag: 24.04.2007
(51) Int. Cl.: F23C 9/08, F23D 14/22, F23D 14/78

(54) **Brenner und damit ausgestattetes Brennstoffzellensystem**
Burner and associated fuel cell system
Brûleur et système de pile à combustible associé

(30) Priorität: 23.05.2006 DE 102006024574
(43) Veröffentlichungstag der Anmeldung: 28.11.2007
(73) Patentinhaber: Eberspächer Climate Control Systems GmbH & Co. KG, 73730 Esslingen (DE)
(72) Erfinder: Kaupert, Andreas, 73730, Esslingen (DE); Eberspach, Günter, 72649, Wolfschlugen (DE)
(74) Vertreter: BRP Renaud & Partner mbB Rechtsanwälte Patentanwälte Steuerberater

(56) Entgegenhaltungen:
- EP-A- 1 231 658
- EP-A- 1 571 726
- EP-A- 1 619 737
- DE-A1-102004 033 545
- US-A1- 2002 090 587

## Beschreibung

Die vorliegende Erfindung betrifft einen Brenner, insbesondere einen Restgasbrenner für ein Brennstoffzellensystem. Die Erfindung betrifft außerdem ein mit einem derartigen Brenner ausgestattetes Brennstoffzellensystem.

Aus der DE 10 2004 033 545 A1 ist ein Brenner bekannt, der bei einem Brennstoffzellensystem zur Verbrennung von Restgasen, also von Anodenabgas und von Kathodenabgas einer Brennstoffzelle verwendet wird. Der Brenner umfasst eine Brennkammer, die eingangsseitig von einer Versorgungswand und ausgangsseitig von einem Wärmeübertrager begrenzt ist. Die Brennkammer ist außerdem seitlich von einer Brennerwand eingefasst. Die Versorgungswand weist eine Brennerzone mit Oxidatorgasöffnungen zur Versorgung der Brennkammer mit Oxidatorgas und mit Brennstoffgasöffnungen zur Versorgung der Brennkammer mit Brennstoffgas auf. Beim bekannten Brenner ist zur thermischen Isolierung der Brennkammer innerhalb der Brennerwand eine dazu beabstandete, die Brennkammer seitlich einfassende Innenwand angeordnet. Hierdurch wird zwischen der Innenwand und der außen liegenden Brennerwand ein ringförmiger Kühlraum geschaffen, der im Betrieb des Brenners mit einem Kühlgas beaufschlagt wird. Die Kühlgasversorgung erfolgt dabei durch Öffnungen in der Versorgungswand. Vorzugsweise wird als Kühlgas das den Oxidatorgasöffnungen der Brennerzone zugeführte Oxidatorgas verwendet.

Die vorliegende Erfindung beschäftigt sich mit dem Problem, für einen Brenner bzw. für ein damit ausgestattetes Brennstoffzellensystem eine verbesserte Ausführungsform anzugeben, die sich insbesondere durch eine reduzierte thermische Belastung des Wärmeübertragers auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung schlägt die Verwendung eines Kreuzstrom-Wärmeübertragers zur Begrenzung der Brennkammer vor, bei dem ein Primärpfad von Brennerabgas als Primärmedium in einer Primärrichtung durchströmbar ist und bei dem ein mit dem Primärpfad wärmeübertragend gekoppelter Sekundärpfad von einem Sekundärmedium in einer quer zur Primärrichtung orientierten Sekundärrichtung durchströmbar ist. Mit Hilfe der Kreuzstrom-Bauweise kann der Wärmeübertrager als Hochtemperatur-Wärmeübertrager ausgestaltet werden. Hierdurch eignet sich der Wärmeübertrager in besonderer Weise zur Begrenzung der Brennkammer in der Primärrichtung, also in der Strömungsrichtung der Brennerabgase. Ein derartiger Kreuzstrom-Wärmeübertrager kann im Betrieb des Brenners extrem hohen thermischen Belastungen ausgesetzt sein. Denn an der Eingangsseite des Primärpfads tritt das ungekühlte, heiße Primärmedium ein, während an der Eingangsseite des Sekundärpfads das zur Kühlung dienende und somit vergleichsweise kalte Sekundärmedium eintritt. In diesem sowohl an die Eingangsseite des Primärpfads als auch an die Eingangsseite des Sekundärpfads angrenzenden Bereich des Kreuzstrom-Wärmeübertragers tritt somit innerhalb des Wärmeübertragers die maximale Temperaturdifferenz auf. Damit geht eine extreme thermische Belastung des Wärmeübertragers in diesem Bereich einher. Um diese thermische Belastung des Wärmeübertragers zu reduzieren, schlägt die Erfindung vor, in der Versorgungswand eine Bypasszone mit Bypassöffnungen vorzusehen, die zur Versorgung der Brennkammer mit Bypassgas dienen. Dabei ist diese Bypasszone erfindungsgemäß innerhalb der Versorgungswand so angeordnet, dass der zuvor beschriebene, thermisch hoch belastete, kritische Bereich des Wärmeübertragers mit vergleichsweise kaltem Bypassgas bzw. mit gekühltem Brennerabgas beaufschlagt wird. Hierdurch wird die thermische Belastung des Wärmeübertragers reduziert. Die Erfindung beruht dabei auf dem allgemeinen Gedanken, dass es zur Reduzierung der thermischen Belastung des Wärmeübertragers ausreicht, in dem einerseits an die Eingangsseite des Primärpfads und andererseits an die Eingangsseite des Sekundärpfads angrenzenden Bereich des Wärmeübertragers die Gastemperatur im Primärmedium abzusenken. Die Erfindung weicht hierbei von der üblichen Auslegung ab, bei der sowohl für den Primärpfad als auch für den Sekundärpfad eine möglichst homogene Temperaturverteilung im einlassseitigen Strömungsquerschnitt des Primärmediums bzw. des Sekundärmediums angestrebt wird, um einen möglichst hohen Wirkungsgrad für die Wärmeübertragung zwischen Primärmedium und Sekundärmedium zu erzielen. Im Unterschied dazu orientiert sich die erfindungsgemäße Auslegung am Temperaturgradienten und reduziert die thermische Belastung des Wärmeübertragers. Der dabei unvermeidbare Verlust an Wirkungsgrad bei der Wärmeübertragung wird in Kauf genommen und durch die mit Hilfe dieser Maßnahme verlängerte Lebenszeit des Wärmeübertragers mehr als aufgewogen.

Erfindunggemäss ist die Bypasszone ausschließlich in dem den Eingangsseiten von Primär- und Sekundärpfad zugeordneten Bereich der Versorgungswand angeordnet sein. Diese Ausführungsform beruht auf der Überlegung, dass es für die gewünschte Reduzierung der thermischen Belastung des Wärmeübertragers ausreicht, nur den Bereich des Wärmeübertragers, in dem der größte Temperaturgradient vorliegt, mit Bypassgas bzw. mit gekühltem Brennerabgas zu beaufschlagen. Die Realisierung der jeweiligen Bypasszone wird dadurch vergleichsweise preiswert.

Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils eine stark vereinfachte, schaltplanartige Prinzipdarstellung eines Brennstoffzellensystems bei verschiedenen Ausführungsformen,
- Fig. 3 und 4: jeweils einen Querschnitt eines Brenners bei verschiedenen Ausführungsformen entsprechend den Schnittlinien III in Fig. 1 bzw. IV in Fig. 2.

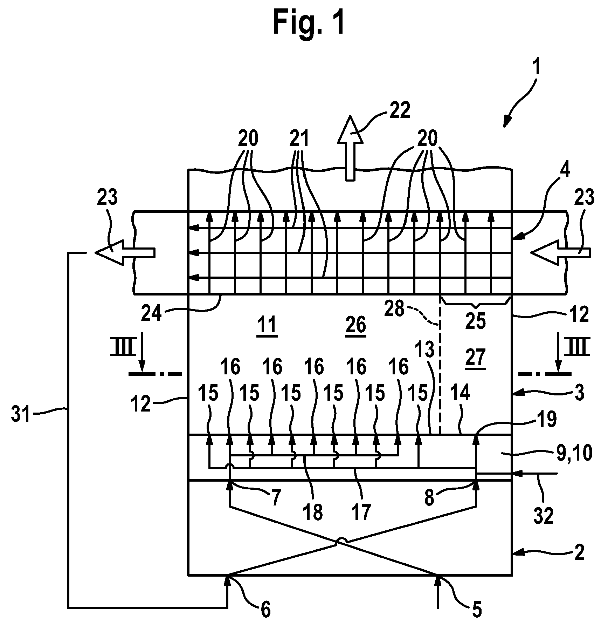

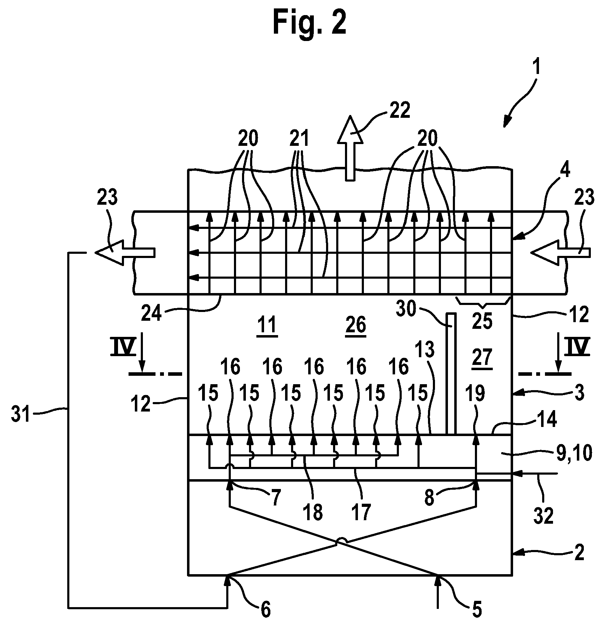

Entsprechend den Fig. 1 und 2 umfasst ein nur teilweise dargestelltes Brennstoffzellensystem 1 eine Brennstoffzelle 2, einen Brenner 3 und einen Wärmeübertrager 4. Die Brennstoffzelle 2 dient in üblicher Weise zur Stromerzeugung aus einem Oxidatorgas, insbesondere Luft oder reiner Sauerstoff, und aus einem Brenngas, das vorzugsweise Wasserstoff enthält.

Das Brennstoffzellensystem 1 ist vorzugsweise in einem Kraftfahrzeug angeordnet. Beispielsweise kann das Brennstoffzellensystem 1 im Fahrzeug als zusätzliche Stromversorgungseinrichtung dienen, die insbesondere motorunabhängig arbeitet. Ebenso ist es grundsätzlich möglich, mit Hilfe eines derartigen Brennstoffzellensystems 1 beispielsweise eine Lichtmaschine des Fahrzeugs zu ersetzen.

Zur Brenngasgenerierung kann das Brennstoffzellensystem 1 außerdem mit einem hier nicht gezeigten Reformer ausgestattet sein, der das Brenngas beispielsweise mittels partieller Oxidation aus einem kohlenwasserstoffhaltigen Brennstoff und aus einem sauerstoffhaltigen Oxidator erzeugt. Das Brenngas wird der Brennstoffzelle 2 über einen Anodeneingang 5 zugeführt. Der Brennstoffzelle 2 wird außerdem über einen Kathodeneingang 6 das Oxidatorgas zugeführt. In der Brennstoffzelle 2 erfolgt dann in üblicher Weise die elektrochemische Verstromung, bei der an der Anodenseite Kohlenmonoxid und Wasserstoff mit Hilfe von Sauerstoff der Kathodenseite in Wasser und Kohlendioxid umgesetzt werden. Bei der Brennstoffzelle 2 handelt es sich vorzugsweise um eine Festkörper-Brennstoffzelle (SOFC), die insbesondere als Hochtemperatur-Brennstoffzelle ausgestaltet sein kann.

An einem Anodenausgang 7 der Brennstoffzelle tritt Anodenabgas aus. Da die Umsetzung des Brenngases im Brennstoffzellenprozess üblicherweise nicht vollständig ist, enthält das Anodenabgas weiterhin reaktionsfähigen Wasserstoff. Beim Anodenabgas handelt es sich somit um ein Brennstoffgas. Kathodenseitig tritt an einem Kathodenausgang 8 der Brennstoffzelle Kathodenabgas aus. Aufgrund des unvollständigen Umsetzungsvorganges enthält auch das Kathodenabgas noch nicht umgesetzten Sauerstoff, so dass auch das Kathodenabgas noch immer ein Oxidatorgas ist.

Die Brennstoffzelle 2 besteht üblicherweise aus einem Stapel keramischer Platten, die einerseits die Anodenseite und andererseits die Kathodenseite der Brennstoffzelle 2 bilden. Dieser Plattenstapel ist zumindest an einem Ende der Brennstoffzelle 2 mit einer Endplatte 9 abgeschlossen, an der sich der Anodenausgang 7 und der Kathodenausgang 8 befinden. Ebenso ist es grundsätzlich möglich, in diese Endplatte 9 den Anodeneingang 5 und den Kathodeneingang 6 zu integrieren, worauf hier zur besseren Darstellbarkeit verzichtet worden ist. Von besonderer Bedeutung bei der hier gezeigten Bauweise des Brennstoffzellensystems 1 bzw. des Brenners 3 ist, dass die Endplatte 9 der Brennstoffzelle 2 eine Versorgungswand 10 des Brenners 3 bildet. Mit anderen Worten, die Versorgungswand 10 bildet die Endplatte 9 der Brennstoffzelle 2. Hierdurch ergibt sich eine vereinfachte Leitungsführung für das dem Brenner 3 zugeführte Brennstoffgas (Anodenabgas) und das dem Brenner 3 zugeführte Oxidatorgas (Kathodenabgas). Gleichzeitig wird für das Brennstoffzellensystem 1 eine extrem kompakte Bauform erreicht.

Der Brenner 3 weist eine Brennkammer 11 auf, die eingangsseitig von der Versorgungswand 10 begrenzt ist. Ausgangsseitig ist die Brennkammer 11 vom Wärmeübertrager 4 begrenzt.

Erfindungsgemäss ist der Wärmeübertrager 4 auch als Komponente des Brenners 3 aufgefasst werden. Seitlich ist die Brennkammer 11 von einer umlaufenden Brennerwand 12 eingefasst. Die Versorgungswand 10 weist an ihrer der Brennkammer 11 zugewandten Seite eine Brennerzone 13 sowie eine Bypasszone 14 auf. In der Brennerzone 13 sind in der Versorgungswand 10 mehrere Oxidatorgasöffnungen 15 und mehrere Brennstoffgasöffnungen 16 ausgebildet. Die Oxidatorgasöffnungen 15 dienen zur Versorgung der Brennkammer 11 mit Oxidatorgas. Dementsprechend sind die Oxidatorgasöffnungen 15 über ein in die Versorgungswand 10 integriertes Oxidatorgasleitungssystem 17 mit dem Kathodenausgang 8 verbunden. Die Brennstoffgasöffnungen 16 dienen zur Versorgung der Brennkammer 11 mit Brennstoffgas. Dementsprechend sind die Brennstoffgasöffnungen 16 über ein entsprechendes, in der Versorgungswand 10 ausgebildetes Brennstoffgasleitungssystem 18 an den Anodenausgang 7 angeschlossen.
In der Bypasszone 14 ist die Versorgungswand 10 mit mehreren Bypassöffnungen 19 versehen, durch die ein Bypassgas in die Brennkammer 11 einströmen kann. Generell handelt es sich beim Bypassgas um ein den Verbrennungsprozess in der Brennkammer 11 seitlich umgehendes Gas. Das Bypassgas ist relativ zum Brennerabgas kühl. Als Bypassgas eignet sich grundsätzlich ein beliebiges Inertgas. Bevorzugt kann jedoch auch ein Oxidatorgas als Bypassgas verwendet werden. Bevorzugt wird hier eine Ausführungsform, bei welcher das ohnehin zur Verfügung stehende Oxidatorgas, nämlich das Kathodenabgas, als Bypassgas verwendet wird. Dementsprechend sind die Bypassöffnungen 19 durch Oxidatorgasöffnungen 15 gebildet und sind an das Oxidatorgasleitungssystem 17 angeschlossen. Grundsätzlich ist jedoch auch eine externe Kühlgasversorgung denkbar, z.B. über eine Kühlgasleitung 32.

Der Wärmeübertrager 4 ist als Kreuzstrom-Wärmeübertrager ausgestaltet. Dementsprechend besitzt der Wärmeübertrager 4 einen Primärpfad 20, der hier durch vertikale Pfeile angedeutet ist, sowie einen Sekundärpfad 21, der hier durch horizontale Pfeile angedeutet ist. Die beiden Pfade 20, 21 sind wärmeübertragend miteinander gekoppelt. Im Primärpfad 20 wird ein Primärmedium in einer durch einen Pfeil angedeuteten Primärrichtung 22 durch den Wärmeübertrager 4 hindurchgeführt. Im Sekundärpfad 21 wird ein Sekundärmedium in einer durch Pfeile angedeutete Sekundärrichtung 23 hindurchgeführt. Die wärmeübertragende Kopplung zwischen den Pfaden 20, 21 führt dabei zu einem Wärmeübergang zwischen den Medien. Charakterisierend für den Kreuzstrom-Wärmeübertrager 4 ist, dass die Primärrichtung 22 im wesentlichen senkrecht zur Sekundärrichtung 23 verläuft.

Da der Wärmeübertrager 4 die Brennkammer 11 ausgangsseitig begrenzt, ist das Primärmedium durch das Brennerabgas gebildet. Gleichzeitig erstreckt sich bei der gewählten Anordnung eine Eingangsseite 24 des Primärpfads 20 quer, also senkrecht zur Primärrichtung 22. Ebenso erstreckt sich hier die Versorgungswand 10 im wesentlichen quer zur Primärrichtung 22. Des Weiteren ist die Versorgungswand 10 hier eben ausgebildet, so dass die Versorgungswand 10 parallel zur Eingangsseite 24 des Wärmeüberträgers 4 verläuft. Vorzugsweise sind die Öffnungen 15, 16 und 19 in der Versorgungswand 10 so angeordnet, dass im Betrieb des Brenners 3 das jeweilige Gas in der Primärrichtung 22 in die Brennkammer 11 einströmen kann. Versorgungswand 10 und Wärmeübertrager 4 sind in der Primärrichtung 22 voneinander beabstandet angeordnet und bilden zwischen sich die Brennkammer 11. Der Wärmeübertrager 4 weist einen durch eine geschweifte Klammer gekennzeichneten Bereich 25 auf, der sowohl bezüglich des Primärpfads 20 als auch bezüglich des Sekundärpfads 21 eingangsseitig angeordnet ist. Dieser Bereich 25 wird seitens des Sekundärpfads 21 mit dem Sekundärmedium vor der Wärmeübertragung und seitens des Primärpfads 20 mit dem Brennerabgas vor der Wärmeübertragung beaufschlagt. In der Folge herrscht in diesem Bereich 25 die maximale Temperaturdifferenz zwischen Brennerabgas und Sekundärmedium.

Erfindungsgemäß ist nun die Bypasszone 14 innerhalb der Versorgungswand 10 in einem Abschnitt angeordnet, der besagtem Bereich 25 des Wärmeübertragers 4 zugeordnet ist. In der Folge kommt es im Betrieb des Brenners 3 zu einer primärseitigen Beaufschlagung des Bereichs 25 mit Bypassgas oder mit einem Gemisch aus Bypassgas und Brennerabgas. Folglich wird der Bereich 25 seitens des Primärpfads mit einer reduzierten Temperatur beaufschlagt, wodurch der Temperaturgradient zwischen Primärseite und Sekundärseite in diesem Bereich 25 des Wärmeübertragers 4 gesenkt wird. Die mit dem Temperaturgradienten einhergehenden thermischen Belastungen lassen sich dadurch reduzieren.

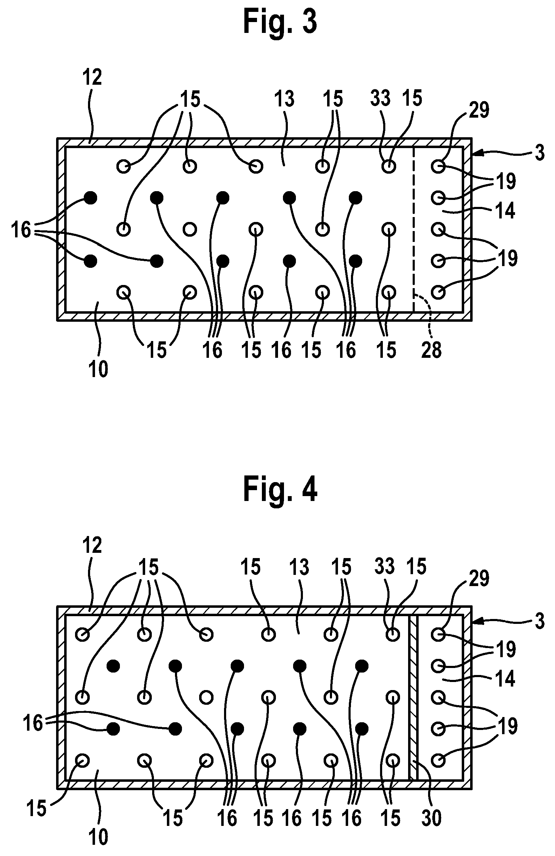

Erfindungsgemäss ist besagte Bypasszone 14 ausschließlich in dem dem Bereich 25 zugeordneten Abschnitt der Versorgungswand 10 angeordnet. Auf diese Weise wird die gesamte zur Verfügung stehende Bypassgasmenge konzentriert dem Bereich 25 zugeführt, um dort eine maximale Reduzierung des Temperaturgradienten zu erreichen.
Durch die Ausgestaltung der Versorgungswand 10 mit der Brennerzone 13 und der Bypasszone 14 werden in der Brennkammer 11 ein von der Brennerzone 13 begrenzter Reaktionsraum 26 und ein von der Bypasszone 14 begrenzter Bypassraum 27 ausgebildet. Bei den Ausführungsformen der Fig. 1 und 3 geht der Reaktionsraum 26 offen in den Bypassraum 27 über. Eine gedachte Grenze zwischen Brennerzone 13 und Bypasszone 14 bzw. zwischen Reaktionsraum 26 und Bypassraum 27 ist dabei durch eine unterbrochene Linie dargestellt und mit 28 bezeichnet. Bei diesem offenen Übergang zwischen Reaktionsraum 26 und Bypassraum 27 erfolgt im Betrieb des Brenners 3 eine gewisse Durchmischung von Brennerabgas und Bypassgas. Gleichzeitig kann ein Teil des Bypassgases, sofern es sich um Oxidatorgas handelt, am Verbrennungsprozess im Reaktionsraum 26 teilnehmen. Bei dieser Ausführungsform ist innerhalb der Bypasszone 14 zumindest eine Bypassöffnungsreihe 29 vorgesehen, die ausschließlich aus Bypassöffnungen 19 besteht. Benachbart zur Bypassöffnungsreihe 29 ist eine Oxidatoröffnungsreihe 33 angeordnet, die ausschließlich aus Oxidatorgasöffnungen 15 besteht. Zwischen der Oxidatoröffnungsreihe 33 und der Bypassöffnungsreihe 29 verläuft die Grenzlinie 28 und grenzen die Brennerzone 13 und die Bypasszone 14 aneinander. Das aus diesen Öffnungen 15 der Oxidatoröffnungsreihe 33 austretende Oxidatorgas nimmt an der Verbrennungsreaktion im Reaktionsraum 26 teil bzw. kann mit dem Bypassgas durchmischt werden. Die Oxidatorgasströmung aus dieser Oxidatoröffnungsreihe 33 führt dabei zu einer Abschirmung der aus der anderen Bypasslochreiche 29 austretenden Oxidatorgasströmung, wodurch diese vergleichsweise ungehindert den Bypassraum 27 durchströmen und den Bereich 25 beaufschlagen kann.

Bei der in den Fig. 2 und 4 gezeigten Ausführungsform ist in der Brennkammer 11 eine Trennwand 30 angeordnet. Diese Trennwand 30 trennt den Reaktionsraum 26 vom Bypassraum 27. Dabei kontaktiert die Trennwand 30 die Versorgungswand 10, während sie von der Eingangsseite 24 des Wärmeübertragers 4 beabstandet sein kann. Durch die Trennwand 30 ist die aus den Bypassöffnungen 19 austretende Oxidatorgasströmung weitgehend vom Verbrennungsprozess der Reaktionskammer 11 entkoppelt, wodurch die Bypassgasströmung im wesentlichen ungehindert den Bereich 25 beaufschlagen kann.

Entsprechend den Fig. 3 und 4 können innerhalb der Brennerzone 13 die Oxidatorgasöffnungen 15 und die Brennstoffgasöffnungen 16 einander regelmäßig abwechselnd angeordnet sein, wobei die Brennstoffgasöffnungen 16 vorzugsweise allseits von Oxidatorgasöffnungen 15 eingeschlossen bzw. benachbart sind. In der Bypasszone 14 sind dabei ausschließlich Bypassöffnungen 19 angeordnet, also insbesondere keine Brennstoffgasöffnungen 16. Dabei ist klar, dass es sich bei den Bypassöffnungen 19 um Oxidatorgasöffnungen 15 handelt, sobald Oxidatorgas als Bypassgas verwendet wird. Des Weiteren sind die Brennstoffgasöffnungen 16 ausschließlich in der Brennerzone 13 angeordnet.

Entsprechend den Fig. 1 und 2 kann der Wärmeübertrager 4 dazu genutzt werden, das der Brennstoffzelle 2 zugeführte Oxidatorgas vorzuheizen. Dementsprechend ist der Sekundärpfad 21 ausgangsseitig über eine Oxidatorleitung 31 an den Kathodeneingang 6 der Brennstoffzelle 2 angeschlossen.

Während eines Startbetriebs des Brennstoffzellensystems 1 muss die Brennstoffzelle 2 auf eine Betriebstemperatur angehoben werden, ab welcher der Brennstoffzellenprozess ablaufen kann. Während dieser Warmlaufphase durchströmen das der Anode zugeführte Brenngas und das der Kathode zugeführte Oxidatorgas die Brennstoffzelle 2 quasi ohne Umsetzung. Gleichzeitig kommt es im Brenner 3 sofort zu einer intensiven Verbrennungsreaktion mit starker Wärmeabgabe an den Wärmeübertrager 4. Während der Aufheizphase tritt das Kathodenabgas, also das Oxidatorgas quasi mit Umgebungstemperatur im Bereich der Bypasszone 14 als Bypassgas in den Bypassraum 27 ein und führt zu einer intensiven Kühlung des Eingangsbereichs 25. Die Umgebungstemperatur kann beispielsweise 20°C betragen, während die Brennerabgase bereits kurz nach Inbetriebnahme des Brennstoffzellensystems 1 zwischen 900 und 1.000°C aufweisen können. Erst mit zunehmender Erwärmung der Brennstoffzelle 2 kommt es zu einer entsprechenden Temperaturerhöhung im Kathodenabgas. Sofern auch für den Normalbetrieb des Brennstoffzellensystems 1 eine intensive Kühlung des Eingangsbereichs 25 erforderlich sein sollte, kann zusätzlich über die optional vorgesehene Kühlgasleitung 32 ein geeignetes Kühlgas, z.B. den Wärmeübertrager 4 umgehendes Oxidatorgas, den Bypassöffnungen 19 zugeführt werden.

## Patentansprüche

1. Brenner, insbesondere Restgasbrenner für ein Brennstoffzellensystem (1),
- mit einer Versorgungswand (10) und einem Wärmeübertrager (4),
- mit einer Brennkammer (11), die eingangsseitig von der Versorgungswand (10) und ausgangsseitig von dem Wärmeübertrager (4) begrenzt ist und die seitlich von einer Brennerwand (12) eingefasst ist,
- wobei die Versorgungswand (10) eine Brennerzone (13) mit Oxidatorgasöffnungen (15) zur Versorgung der Brennkammer (11) mit Oxidatorgas und mit Brennstoffgasöffnungen (16) zur Versorgung der Brennkammer (11) mit Brennstoffgas aufweist,
- wobei die Versorgungswand (10) eine Bypasszone (14) mit Bypassöffnungen (19) zur Versorgung der Brennkammer (11) mit Bypassgas aufweist,
**dadurch gekennzeichnet,**
- **dass** der Wärmeübertrager (4) als Kreuzstrom-Wärmeübertrager ausgestaltet ist, dessen Primärpfad (20) von Brennerabgas als Primärmedium in einer Primärrichtung (22) durchströmbar ist und dessen mit dem Primärpfad (20) wärmeübertragend gekoppelter Sekundärpfad (21) von einem Sekundärmedium in einer quer zur Primärrichtung (22) orientierten Sekundärrichtung (23) durchströmbar ist,
- **dass** die Bypasszone (14) in einem Abschnitt der Versorgungswand (10) angeordnet ist, welcher einem Bereich (25) des Wärmeübertragers (4) zugeordnet ist, der sowohl an den Primärpfad (20) als auch an den Sekundärpfad (21) eingangsseitig angrenzt, so dass das Bypassgas oder ein Bypassgas-Brenner-Abgas-Gemisch im Betrieb des Brenners (3) diesen Bereich (25) primärseitig beaufschlagt,
- **dass** die Bypasszone (14) ausschließlich in dem diesem Bereich (25) des Wärmeübertragers (4) zugeordneten Abschnitt der Versorgungswand (10) angeordnet ist.

2. Brenner nach Anspruch 1,
**dadurch gekennzeichnet,**
**dass** die Bypasszone (14) und die Brennerzone (13) zwischen einer Reihe (29) aus Bypassöffnungen (19) und einer Reihe (33) aus Oxidatorgasöffnungen (15) aneinander grenzen.

3. Brenner nach Anspruch 1 oder 2,
**dadurch gekennzeichnet,**
- **dass** in der Bypasszone (14) ausschließlich Bypassöffnungen (19) angeordnet sind, und/oder
- **dass** die Brennstoffgasöffnungen (16) ausschließlich in der Brennerzone (13) angeordnet sind.

4. Brenner nach einem der Ansprüche 1 bis 3,
**dadurch gekennzeichnet,**
**dass** die Brennkammer (11) einen von der Brennerzone (13) begrenzten Reaktionsraum (26) und einen von der Bypasszone (14) begrenzten Bypassraum (27) aufweist.

5. Brenner nach Anspruch 4,
**dadurch gekennzeichnet,**
- **dass** der Reaktionsraum (26) offen in den Bypassraum (27) übergeht, oder
- **dass** in der Brennkammer (11) eine Trennwand (30) angeordnet ist, die den Reaktionsraum (26) vom Bypassraum (27) trennt.

6. Brenner nach einem der Ansprüche 1 bis 5,
**dadurch gekennzeichnet,**
- **dass** die Öffnungen (15, 16, 19) in der Versorgungswand (10) so angeordnet sind, dass das jeweilige Gas im Betrieb des Brenners (3) in der Primärrichtung (22) in die Brennkammer (11) einströmt, und/oder
- **dass** die Versorgungswand (10) eben ist und sich quer zur Primärrichtung (22) erstreckt, und/oder
- **dass** sich eine Eingangsseite (24) des Primärpfads (20) quer zur Primärrichtung (22) erstreckt, und/oder
- **dass** die Versorgungswand (10) und der Wärmeübertrager (4) in der Primärrichtung (22) voneinander beabstandet sind.

7. Brenner nach einem der Ansprüche 1 bis 6,
**dadurch gekennzeichnet,**
**dass** die Bypassöffnungen (19) durch Oxidatorgasöffnungen (15) gebildet sind, so dass im Betrieb des Brenners (3) Oxidatorgas als Bypassgas in die Brennkammer (11) eintritt.

8. Brenner nach einem der Ansprüche 1 bis 7,
**dadurch gekennzeichnet,**
- **dass** die Versorgungswand (10) durch eine ausgangsseitige Endplatte (9) einer Brennstoffzelle (2) gebildet ist,
- **dass** die Oxidatorgasöffnungen (15) mit einem Kathodenabgasausgang (8) der Brennstoffzelle (2) kommunizieren,
- **dass** die Brennstoffgasöffnungen (16) mit einem Anodenabgasausgang (7) der Brennstoffzelle (2) kommunizieren.

9. Brennstoffzellensystem, insbesondere in einem Kraftfahrzeug,
- mit einer Brennstoffzelle (2) zur Stromerzeugung aus Oxidatorgas und Brenngas,
- mit einem Brenner (3) nach einem der Ansprüche 1 bis 8,
- wobei ein Kathodenabgasausgang (8) der Brennstoffzelle (2) mit den Oxidatorgasöffnungen (15) der Brennerzone (13) und mit den Bypassöffnungen (19) der Bypasszone (14) verbunden ist, während ein Anodenabgasausgang (7) der Brennstoffzelle (2) mit den Brennstoffgasöffnungen (16) der Brennerzone (13) verbunden ist.

10. Brennstoffzellensystem nach Anspruch 9,
**dadurch gekennzeichnet,**
**dass** der Sekundärpfad (21) des Wärmeübertragers (4) ausgangsseitig mit einem Kathodeneingang (6) der Brennstoffzelle (2) verbunden ist.

## Claims

1. A burner, in particular a residual gas burner for a fuel cell system (1),
- comprising a combustion chamber (11) that is bordered at the inlet end by the supply wall (10) and is bordered at the outlet end by the heat exchanger (4) and is enclosed laterally by a burner wall (12),
- whereby the supply wall (10) has a burner zone (13) with oxidizer gas openings (15) for supplying oxidizer gas to the combustion chamber (11) and with combustion gas openings (16) for supplying combustion gas to the combustion chamber (11),
- whereby the supply wall (10) has a bypass zone (14) with bypass openings (19) for supplying bypass gas to the combustion chamber (11),
**Characterized in**
- **that** the heat exchanger (4) is designed as a cross-current heat exchanger, the burner exhaust can flow as the primary medium through the primary path (20) of said heat exchanger in a primary direction (22), and a secondary medium can flow through the secondary path (21) of said heat exchanger, linked to the primary path (20) to allow heat transfer, in a secondary direction (23) oriented across the primary direction (22),
- **that** the bypass zone (14) is arranged in a section of the supply wall (10) which is allocated to an area (25) of the heat exchanger (4) that is adjacent to the primary path (20) as well as to the secondary path (21) at the inlet end, so that the bypass gas or a bypass gas-burner exhaust gas mixture acts upon this area (25) on the primary end during operation of the burner (3),
- the bypass zone (14) is arranged exclusively in the section of the supply wall (10) allocated to this area (25) of the heat exchanger (4).

2. The burner according to Claim 1,
**characterized in that**
the bypass zone (14) and the burner zone (13) are adjacent to one another between a row (29) of bypass openings (19) and a row (33) of oxidizer gas openings (15).

3. The burner according to Claim 1 or 2,
**characterized in that**
- exclusively bypass openings (19) are arranged in the bypass zone (14), and/or
- the combustion gas openings (16) are arranged exclusively in the burner zone (13).

4. The burner according to any one of Claims 1 through 3, **characterized in that**
the combustion chamber (11) has a reaction space (26) bordered by the burner zone (13) and a bypass space (27) bordered by the bypass zone (14).

5. The burner according to Claim 4,
**characterized in that**
- the reaction space (26) opens into the bypass space (27), or
- a partition (30) is arranged in the combustion chamber (11) dividing the reaction space (26) from the bypass space (27).

6. The burner according to any one of Claims 1 through 5, **characterized in that**
- the openings (15, 16, 19) are arranged in the supply wall (10) in such a way that the respective gas flows into the combustion chamber (11) in the primary direction (22) during operation of the burner (3), and/or
- the supply wall (10) is flat and extends across the primary direction (22), and/or
- an inlet end (24) of the primary path (20) extends across the primary direction (22), and/or
- the supply wall (10) and the heat exchanger (4) are arranged a distance apart from one another in the primary direction (22).

7. The burner according to any one of Claims 1 through 6, **characterized in that**
the bypass openings (19) are formed by oxidizer gas openings (15) so that oxidizer gas enters the combustion chamber (11) as bypass gas during operation of the burner (3).

8. The burner according to any one of Claims 1 through 7, **characterized in that**
- the supply wall (10) is formed by an end plate (9) of a fuel cell (2) at the outlet end,
- the oxidizer gas openings (15) communicate with a cathode exhaust gas outlet (8) of the fuel cell (2),
- the combustion gas openings (16) communicate with an anode exhaust gas outlet (7) of the fuel cell (2).

9. A fuel cell system, in particular in a motor vehicle,
- comprising a fuel cell (2) for generating electric power from oxidizer gas and combustion gas,
- with a burner (3) according to any one of Claims 1 through 8,
- whereby a cathode exhaust gas outlet (8) of the fuel cell (2) is connected to the oxidizer gas openings (15) of the burner zone (13) and to the bypass openings (19) of the bypass zone (14) while an anode exhaust gas outlet (7) of the fuel cell (2) is connected to the combustion gas openings (16) of the burner zone (13).

10. The fuel cell system according to Claim 9,
**characterized in that**
the secondary path (21) of the heat exchanger (4) is connected at the outlet end to a cathode inlet (6) of the fuel cell (2).

## Revendications

1. Brûleur, notamment brûleur de gaz résiduels d'un système de cellules combustibles (1),
- avec une paroi d'alimentation (10) et avec un échangeur de chaleur (4),
- avec une chambre de combustion (11) qui est délimitée côté entrée par la paroi d'alimentation (10) et côté sortie par l'échangeur de chaleur (4) et qui est bordée latéralement par une paroi de brûleur (12),
- la paroi d'alimentation (10) comportant une zone de brûleur (13) avec des orifices de gaz oxydant (15) pour l'alimentation de la chambre de combustion (11) en gaz oxydant et avec des orifices de gaz combustible (16) pour l'alimentation de la chambre de combustion (11) en gaz combustible,
- la paroi d'alimentation (10) comportant une zone de dérivation (14) avec des orifices de dérivation (19) pour l'alimentation de la chambre de combustion (11) en gaz de dérivation,
**caractérisé en ce que**
- l'échangeur de chaleur (4) est conçu comme un échangeur de chaleur à courants inversés dont le circuit primaire (20) peut être parcouru par un gaz d'échappement de brûleur comme fluide primaire dans une direction primaire (22) et dont le circuit secondaire (21), couplé au circuit primaire (20) pour la transmission de chaleur, peut être parcouru par un fluide secondaire dans une direction secondaire (23) orientée transversalement par rapport à la direction primaire (22),
- la zone de dérivation (14) est agencée dans un tronçon de la paroi d'alimentation (10), lequel tronçon est associé à une zone (25) de l'échangeur de chaleur (4) qui est adjacente côté entrée aussi bien au circuit primaire (20) qu'au circuit secondaire (21) de telle sorte que le gaz de dérivation ou un mélange de gaz de dérivation et de gaz d'échappement de brûleur alimente côté primaire cette zone (25) lors du fonctionnement du brûleur (3),
- la zone de dérivation (14) est agencée exclusivement dans le tronçon, associé à cette zone (25) de l'échangeur de chaleur (4), de la paroi d'alimentation (10).

2. Brûleur selon la revendication 1, **caractérisé en ce que** la zone de dérivation (14) et la zone de brûleur (13) sont adjacentes l'une à l'autre entre une rangée (29) d'orifices de dérivation (19) et une rangée (33) d'orifices de gaz oxydant (15).

3. Brûleur selon la revendication 1 ou 2, **caractérisé en ce que**
- des orifices de dérivation (19) sont agencés exclusivement dans la zone de dérivation (14), et/ou
- les orifices de gaz combustible (16) sont agencés exclusivement dans la zone de brûleur (13).

4. Brûleur selon l'une des revendications 1 à 3, **caractérisé en ce que** la chambre de combustion (11) comporte un espace de réaction (26) délimité par la zone de brûleur (13) et un espace de dérivation (27) délimité par la zone de dérivation (14).

5. Brûleur selon la revendication 4, **caractérisé en ce que**
- l'espace de réaction (26) se transforme de manière ouverte en espace de dérivation (27), ou
- dans la chambre de combustion (11) est agencée une paroi de séparation (30) qui sépare l'espace de réaction (26) de l'espace de dérivation (27).

6. Brûleur selon l'une des revendications 1 à 5, **caractérisé en ce que**
- les orifices (15, 16, 19) dans la paroi d'alimentation (10) sont agencés de telle sorte que le gaz respectif afflue dans la chambre de combustion (11) dans la direction primaire (22) lors du fonctionnement du brûleur (3), et/ou
- la paroi d'alimentation (10) est plane et s'étend transversalement par rapport à la direction primaire (22), et/ou
- un côté d'entrée (24) du circuit primaire (20) s'étend transversalement par rapport à la direction primaire (22), et/ou
- la paroi d'alimentation (10) et l'échangeur de chaleur (4) sont distants l'un de l'autre dans la direction primaire (22).

7. Brûleur selon l'une des revendications 1 à 6, **caractérisé en ce que** les orifices de dérivation (19) sont formés par des orifices de gaz oxydant (15) de telle sorte que, lors du fonctionnement du brûleur (3), du gaz oxydant entre comme gaz de dérivation dans la chambre de combustion (11).

8. Brûleur selon l'une des revendications 1 à 7, **caractérisé en ce que**
- la paroi d'alimentation (10) est formée par une plaque d'extrémité (9) côté sortie d'une cellule combustible (2),
- les orifices de gaz oxydant (15) communiquent avec la sortie de gaz d'échappement de cathode (8) de la cellule combustible (2),
- les orifices de gaz combustible (16) communiquent avec une sortie de gaz d'échappement d'anode (7) de la cellule combustible (2).

9. Système de cellules combustibles, notamment dans un véhicule automobile,
- avec une cellule combustible (2) pour la production de courant à partir d'un gaz oxydant et d'un gaz combustible,
- avec un brûleur (3) selon l'une des revendications 1 à 8,
- une sortie de gaz d'échappement de cathode (8) de la cellule combustible (2) étant reliée aux orifices de gaz oxydant (15) de la zone de brûleur (13) et aux orifices de dérivation (19) de la zone de dérivation (14) tandis qu'une sortie de gaz d'échappement d'anode (7) de la cellule combustible (2) est reliée aux orifices de gaz combustible (16) de la zone de brûleur (13).

10. Système de cellules combustibles selon la revendication 9, **caractérisé en ce que** le circuit secondaire (21) de l'échangeur de chaleur (4) est relié à une entrée de cathode (6) de la cellule combustible (2).
